# FASCICULE DE BREVET EUROPEEN

(11) **EP 0 674 378 B1**
(45) Date de publication et mention de la délivrance du brevet: **20.08.1997**
(21) Numéro de dépôt: 95104049.2
(22) Date de dépôt: 20.03.1995
(51) Int. Cl.: H02K 5/10, F02N 15/00

(54) **Elément de carter de machine comportant un orifice d'évacuation de liquide obturé par un bouchon troué formant chicane, bouchon et démarreur de véhicule automobile**
Motorgehäuse mit einer bei einem dürchlöcherten ablenkplattenförmigen Stopfen geschlossenen Flüssigentlehrungsöffnung, Stopfen und Anlasser für Motorfahrzeug
Motor housing element comprising a liquid-evacuation orifice closed with a perforated plug forming baffle, plug and starter of a motor vehicle

(30) Priorité: 25.03.1994 FR 9403519
(43) Date de publication de la demande: 27.09.1995
(73) Titulaire: VALEO EQUIPEMENTS ELECTRIQUES MOTEUR, 94000 Créteil (FR)
(72) Inventeur: Glerean, André, F-69270 Fontaines St. Martin (FR); Pawlik, Hugues, F-69008 Lyon (FR); Jacquet, Robert, F-69100 Villeurbanne (FR)
(74) Mandataire: Gamonal, Didier

(56) Documents cités:
- DE-A- 3 247 112
- US-A- 5 053 633
- PATENT ABSTRACTS OF JAPAN, vol. 5 no. 135 (M-085) 27 août 1981; & JP-A-56 069 457

## Description

La présente invention concerne un élément de carter de machine, notamment d'une machine électrique tournante telle qu'un démarreur de véhicule automobile.

L'invention concerne plus particulièrement un élément de carter du type comportant une paroi dans laquelle est formé au moins un orifice d'évacuation de liquide.

Une telle conception est nécessaire pour permettre l'évacuation de liquides qui s'accumulent à l'intérieur du carter et qui résultent, soit de la pénétration intempestive de liquide dans le carter de la machine, soit d'un phénomène de condensation.

Un tel orifice est généralement prévu dans la paroi de l'élément de carter, en position inférieure, pour permettre l'évacuation par gravité du liquide accumulé à l'intérieur du carter.

Cette conception a pour inconvénient principal de présenter un risque de pénétration intempestive de liquide à l'intérieur du carter par l'orifice d'évacuation, par exemple dans le cas d'un démarreur de véhicule automobile, lorsqu'il est procédé à un nettoyage par jet d'eau et/ou de vapeur sous pression du compartiment moteur du véhicule ou du soubassement de ce véhicule.

La présente invention a pour but de proposer une nouvelle conception d'un élément de carter de machine qui permet de remédier à cet inconvénient.

Dans ce but, l'invention propose un Elément de carter de machine, notamment d'une machine électrique tournante, en particulier, démarreur de véhicule automobile, du type comportant une paroi dans laquelle est formé au moins un orifice d'évacuation de liquide partiellement obturé par un bouchon troué formant chicane pour empêcher la pénétration intempestive de liquide à l'intérieur du carter, le bouchon comprenant une tête extérieure et un corps reçu dans l'orifice et des moyens de retenue du bouchon en position montée, un premier passage formé dans le corps du bouchon, qui s'étend selon une direction axiale générale du corps du bouchon qui débouche d'une part à l'intérieur du carter et, d'autre part, dans un second passage formé dans la tête du bouchon qui s'étend selon une direction transversale sensiblement perpendiculaire à celle du premier passage et qui débouche à l'extérieur du carter, le corps du bouchon comportant au moins un épaulement radial d'accrochage du bouchon qui coopère avec la face intérieure de la paroi, caractérisé en ce que la jupe cylindrique du corps du bouchon comporte au moins une fente axiale qui s'étend depuis son bord libre annulaire en direction de la tête du bouchon sensiblement jusqu'au niveau de l'épaulement radial d'accrochage pour permettre l'écoulement de liquide dans le premier passage à travers cette fente.

Un élément de carter de machine selon le préambule de la revendication 1 est connu du document US-A-5 053 633.

Selon d'autres caractéristiques de l'invention :
- le premier passage est formé au centre du corps du bouchon ;
- le second passage débouche par ses deux extrémités dans la paroi latérale de la tête du bouchon ;
- le bouchon est une pièce de révolution dont la tête cylindrique définit un épaulement radial d'appui de la tête sur la face extérieure de la paroi ;
- le corps du bouchon comporte deux épaulements radiaux d'accrochage agencés de manière étagée pour permettre l'accrochage du bouchon sur des parois d'épaisseurs différentes ;
- le bouchon est une pièce moulée en matière plastique.

L'invention propose également un bouchon formant chicane et un démarreur de véhicule automobile, caractérisé en ce que son carter comporte au moins un élément de carter réalisé conformément aux enseignements de l'invention exposés précédemment.

D'autres caractéristiques et avantages de l'invention apparaîtront à la lecture de la description détaillée qui va suivre pour la compréhension de laquelle on se reportera au dessin annexé dans lequel :
- la figure 1 est une vue schématique en perspective éclatée d'un élément de carter équipé d'un bouchon formant chicane conforme aux enseignements de l'invention ;
- la figure 2 est une vue latérale en élévation d'un exemple de réalisation d'un bouchon formant chicane ;
- la figure 3 est une vue en section selon la ligne 3-3 de la figure 2 ;
- la figure 4 est une vue de dessus du bouchon illustré aux figures 1 et 2 ; et
- la figure 5 est une vue en perspective d'une variante de réalisation du bouchon formant chicane.

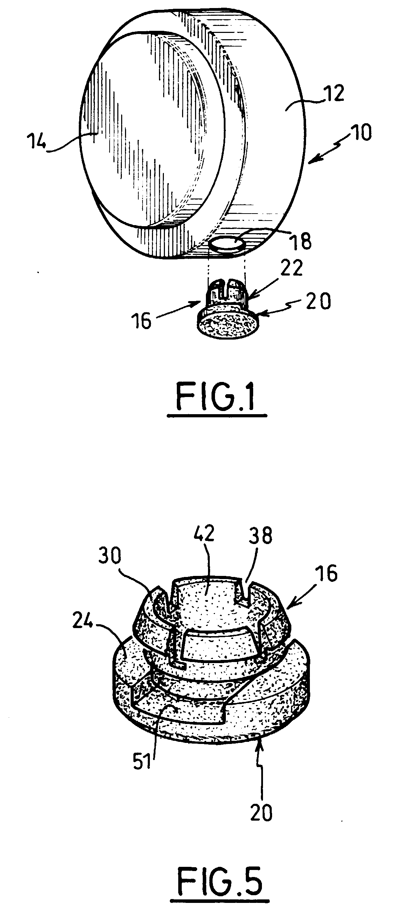

On a représenté de manière schématique sur la figure 1 un élément de carter 10 en forme générale de pot comportant un paroi latérale cylindrique 12 et un fond 14.

L'élément de carter 10, qui est par exemple réalisé en tôle emboutie comporte un orifice 18 d'évacuation de liquide qui, conformément aux enseignements de l'invention, est obturé par un bouchon formant chicane 16.

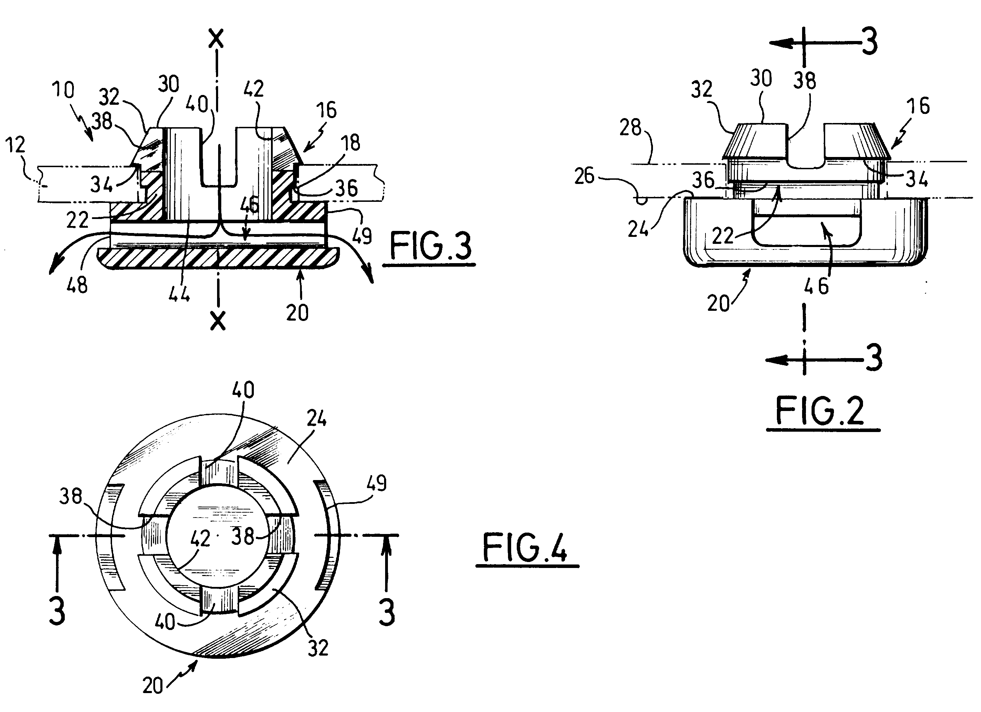

En se reportant aux figures 2 à 4, on constate que le bouchon 16 est une pièce moulée en matière plastique de forme générale de révolution autour de son axe principal X-X.

Le bouchon 16 est prévu pour être reçu dans un orifice 18 de contour circulaire formé dans la tôle de la paroi 12 de l'élément de carter 10 qui est illustrée en silhouette sur les figures 2 et 3.

Le bouchon 16 est constitué pour l'essentiel par une tête 20 située à l'extérieur du carter et par un corps 22 qui s'étend à l'intérieur de carter.

La tête 20 du bouchon 16 présente une forme générale cylindrique et elle délimite, avec le corps 22 un épaulement radial d'appui 24 qui est prévu pour venir en appui contre la face extérieure 26 de la tôle 12.

Le corps 22 du bouchon 16 se présente sous la forme d'une jupe cylindrique annulaire qui s'étend à travers le trou 18 et au-delà de la face intérieure 28 de la tôle 12.

La paroi extérieure de révolution du corps 22 comporte axialement et successivement depuis son bord annulaire libre 30 et en direction de la tête 20, un chanfrein d'introduction 32, un premier épaulement radial d'accrochage 34 et un second épaulement radial d'accrochage 36 de plus petit diamètre que le premier épaulement.

Dans l'application illustrée aux figures 2 et 3 dans laquelle la tôle 12 est de forte épaisseur, c'est l'épaulement radial d'accrochage 34 qui coopère avec la face intérieure 28 de la tôle 12 pour assurer l'accrochage en position du bouchon 16 dans l'orifice 18.

La jupe cylindrique annulaire constitutive du corps 22 du bouchon 16 comporte deux séries de fentes axiales diamétralement opposées deux à deux.

Une première série de fentes comporte deux fentes 38 qui s'étendent axialement depuis le bord libre 30 légèrement au-delà de l'épaulement radial d'accrochage 34.

Une seconde série de fentes comporte deux fentes axiales 40 qui et s'étendent axialement depuis le bord libre 30 légèrement au-delà du second épaulement radial d'accrochage 36.

Conformément aux enseignements de l'invention, le corps 22 du bouchon 16 comporte un alésage central cylindrique 42 qui constitue, au sens de l'invention, un premier passage pour l'écoulement du liquide contenu dans le carter.

Le premier passage 42 débouche d'une part à l'intérieur du carter, et d'autre part, à son extrémité inférieure 44 en considérant la figure 3, dans un second passage 46 formé dans la tête 20 du bouchon 16.

Le second passage 46 présente une section rectangulaire et il traverse de part en part la tête 20 en s'étendant selon un direction transversale sensiblement perpendiculaire à l'axe X-X, ses deux extrémités ouvertes 48 débouchant à l'extérieur du carter dans la paroi latérale 49 de la tête 20.

Conformément aux enseignements de l'invention, le bouchon 16 permet ainsi l'évacuation de liquide contenu dans le carter qui passe par les fentes 38, ou directement par le centre du premier passage 42, puis qui s'écoule dans ce dernier en direction du second passage 46 pour déboucher à l'extérieur par les extrémités ouvertes 48 du second passage 46.

Le bouchon constitue également une chicane qui empêche l'entrée intempestive de liquide à l'intérieur du carter.

En effet, même un jet de liquide sous pression qui vient atteindre la face externe 26 de la paroi 12 à proximité de la tête 20 du bouchon 16 ne peut pénétrer dans le carter du fait de l'orientation transversale du second passage 48 qui ne permet éventuellement à ce liquide sous pression que de traverser le passage 48 sans pouvoir entrer, par le premier passage 22, à l'intérieur du carter.

Dans la variante de réalisation illustrée sur la figure 5, pour faciliter le moulage, le canal 48 est réalisé sous la forme de fentes 51 qui débouchent dans la face d'épaulement 24.

Il est bien entendu possible de prévoir plusieurs orifices 18 équipés de bouchons 16 en différentes zones du carter d'une machine, et par exemple d'un démarreur de véhicule automobile.

## Revendications

1. Elément (10) de carter de machine, notamment d'une machine électrique tournante, en particulier, démarreur de véhicule automobile, du type comportant une paroi (12) dans laquelle est formé au moins un orifice (18) d'évacuation de liquide partiellement obturé par un bouchon (16) troué formant chicane pour empêcher la pénétration intempestive de liquide à l'intérieur du carter (12), le bouchon (16) comprenant une tête extérieure (20) et un corps (22) reçu dans l'orifice (18) et des moyens (34, 36) de retenue du bouchon (16) en position montée, un premier passage (42) formé dans le corps (22) du bouchon, qui s'étend selon une direction axiale générale (X-X) du corps (22) du bouchon (16) qui débouche d'une part à l'intérieur du carter (10) et, d'autre part, dans un second passage (46)formé dans la tête (20) du bouchon (16) qui s'étend selon une direction transversale sensiblement perpendiculaire à celle du premier passage (42) et qui débouche à l'extérieur du carter (10), le corps (22) du bouchon (16) comportant au moins un épaulement radial d'accrochage (34, 36) du bouchon (16) qui coopère avec la face intérieure (28) de la paroi (12), caractérisé en ce que la jupe cylindrique du corps (22) du bouchon (16) comporte au moins une fente axiale (38, 40) qui s'étend depuis son bord libre annulaire (30) en direction de la tête du bouchon (16) sensiblement jusqu'au niveau de l'épaulement radial d'accrochage (34, 36) pour permettre l'écoulement de liquide dans le premier passage (42) à travers cette fente (38, 40).

2. Elément de carter de machine selon la revendication 1, caractérisé en ce que le premier passage (42) est formé au centre du corps (22) du bouchon (16).

3. Elément de carter de machine selon la revendication 1 ou 2, caractérisé en ce que le second passage (46) débouche par ses deux extrémités (48) dans la paroi latérale (49) de la tête (20) du bouchon (16).

4. Elément de carter de machine selon l'une des revendications précédentes, caractérisé en ce que le bouchon (16) est une pièce de révolution dont la tête cylindrique (20) définit un épaulement radial (24) d'appui de la tête (20) sur la face extérieure (26) de la paroi (12).

5. Elément de carter de machine selon la revendication 1, caractérisé en ce que le corps (22) du bouchon (16) comporte deux épaulements radiaux d'accrochage (34, 36) agencés de manière étagée pour permettre l'accrochage du bouchon (16) sur des parois (12) d'épaisseurs différentes.

6. Elément de carter de machine selon l'une quelconque des revendications précédentes, caractérisé en ce que le bouchon (16) est une pièce moulée en matière plastique.

7. Bouchon pour un orifice (18) formé dans un élément de carter de machine réalisé conformément à l'une quelconque des revendications 1 à 6.

8. Démarreur de véhicule automobile, caractérisé en ce que son carter comporte au moins un élément de carter réalisé conformément à l'une quelconque des revendications 1 à 6.

## Patentansprüche

1. Motorgehäuseelement (10), vor allem für eine elektrische Maschine, insbesondere für einen Kraftfahrzeuganlasser, das eine Wand (12) umfaßt, in die mindestens eine Flüssigkeitsentleerungsöffnung (18) eingearbeitet ist, die durch einen durchlöcherten ablenkplattenförmigen Stopfen (16) verschlossen wird, um das unbeabsichtigte Eindringen von Flüssigkeit in das Innere des Gehäuses (12) zu verhindern, wobei der Stopfen (16) einen äußeren Kopf (20) und einen in die Öffnung (18) eingesetzten Körper (22) und Mittel (34, 36) zur Sicherung des Stopfens (16) in Einbauposition umfaßt, sowie einen im Körper (22) des Stopfens ausgebildeten ersten Durchgang (42), der sich in einer allgemeinen axialen Richtung (X-X) des Körpers (22) des Stopfens (16)erstreckt und der einerseits in das Innere des Gehäuses (10) und andererseits in einen im Kopf (20) des Stopfens (16) ausgebildeten zweiten Durchgang (46) mündet, der sich in einer Querrichtung, die in etwa senkrecht zur Richtung des ersten Durchgangs (42) verläuft, erstreckt und der außerhalb des Gehäuses (10) mündet, wobei der Körper (22) des Stopfens (16) mindestens eine radiale Einrastschulter (34, 36) für das Einrasten des Stopfens (16) umfaßt, die mit der Innenfläche (28) der Wand (12) zusammenwirkt , **dadurch gekennzeichnet,** daß der zylindrische Schaft des Körpers (22) des Stopfens (16) mindestens einen axialen Schlitz (38, 40) enthält, der sich von seiner ringförmigen freien Kante (30) aus in Richtung des Kopfes des Stopfens (16) in etwa bis zur Höhe der radialen Einrastschulter (34, 36) erstreckt, um das Abfließen von Flüssigkeit in den ersten Durchgang (42) durch diesen Schlitz (38, 40) zu ermöglichen.

2. Motorgehäuseelement nach Anspruch 1, **dadurch gekennzeichnet,** daß der erste Durchgang (42) in der Mitte des Körpers (22) des Stopfens (16) ausgebildet ist.

3. Motorgehäuseelement nach Anspruch 1 oder 2 , **dadurch gekennzeichnet,** daß der zweite Durchgang (46) mit seinen beiden Enden (48) in der Seitenwand (49) des Kopfes (20) des Stopfens (16) mündet.

4. Motorgehäuseelement nach einem der vorangehenden Ansprüche , **dadurch gekennzeichnet,** daß der Stopfen (16) ein rotationssymmetrisches Teil ist, dessen zylindrischer Kopf (20) eine radiale Schulter (24) für die Auflage des Kopfes (20) an der Außenfläche (26) der Wand (12) bildet.

5. Motorgehäuseelement nach Anspruch 1, **dadurch gekennzeichnet,** daß der Körper (22) des Stopfens (16) zwei radiale Einrastschultern (34, 36) umfaßt, die gestuft angeordnet sind, um das Einrasten des Stopfens (16) an Wänden (12) mit unterschiedlicher Dicke zu ermöglichen.

6. Motorgehäuseelement nach einem der vorangehenden Ansprüche , **dadurch gekennzeichnet,** daß der Stopfen (16) als Formteil aus Kunststoff ausgeführt ist.

7. Stopfen für eine Öffnung (18) in einem Motorgehäuseelement, das nach einem der Ansprüche 1 bis 6 ausgeführt ist.

8. Kraftfahrzeuganlasser, **dadurch gekennzeichnet,** daß sein Gehäuse mindestens ein Gehäuseelement umfaßt, das nach einem der Ansprüche 1 bis 6 ausgeführt ist.

## Claims

1. Machine casing element (10), notably for a rotating electrical machine, in particular a motor vehicle starter, of the type having a wall (12) in which is formed at least one liquid discharge orifice (18) partially closed off by a perforated plug (16) forming a baffle to prevent the unwanted entry of liquid inside the casing (12), the plug (16) comprising an external head (20) and a body (22) received in the orifice (18) and means (34, 36) of retaining the plug (16) in the fitted position, a first passage (42) formed in the body (22) of the plug, which extends in an overall axial direction (X-X) of the body (22) of the plug (16) which opens out on the one hand inside the casing (10) and on the other hand in a second passage (46) formed in the head (20) of the plug (16) which extends in a substantially transverse direction perpendicular to that of the first passage (42) and which opens out outside the casing (10), the body (22) of the plug (16) having at least one radial shoulder (34, 36) for attaching the plug (16) which cooperates with the internal face (28) of the wall (12), characterised in that the cylindrical skirt of the body (22) of the plug (16) has at least one axial slot (38, 40) which extends from its annular free end (30) in the direction of the head of the plug (16) substantially as far as the level of the radial attachment shoulder (34, 36) to allow liquid to flow into the first passage (42) through this slot (38, 40).

2. Machine casing element according to Claim 1, characterised in that the first passage (42) is formed at the centre of the body (22) of the plug (16).

3. Machine casing element according to Claim 1 or 2, characterised in that the second passage (46) opens out through its two ends (48) in the lateral wall (49) of the head (20) of the plug (16).

4. Machine casing element according to one of the preceding claims, characterised in that the plug (16) is a piece formed by revolution, the cylindrical head (20) of which defines a radial shoulder (24) for the head (20) to bear on the external face (26) of the wall (12).

5. Machine casing element according to Claim 1, characterised in that the body (22) of the plug (16) has two radial attachment shoulders (34, 36) arranged in a stepped manner to enable the plug (16) to be attached to walls (12) of different thicknesses.

6. Machine casing element according to one of the preceding claims, characterised in that the plug (16) is a part moulded from plastic.

7. Plug for an orifice (18) formed in a machine casing element produced according to any one of Claims 1 to 6.

8. Motor vehicle starter, characterised in that its casing has at least one casing element produced in accordance with any one of Claims 1 to 6.
